# EUROPÄISCHE PATENTANMELDUNG

(11) **EP 2 239 616 A2**
(43) Veröffentlichungstag der Anmeldung: **13.10.2010**
(21) Anmeldenummer: 10158365.6
(22) Anmeldetag: 30.03.2010
(51) Int. Cl.: G02B 27/14

(54) **Vorrichtung mit einer breitbandigen Lichtquelle**

(30) Priorität: 07.04.2009 DE 102009016631
(71) Anmelder: Leica Microsystems CMS GmbH, 35578 Wetzlar (DE)
(72) Erfinder: Warken, Florian, 69469, Weinheim (DE); Leimbach, Volker, 67065, Ludwigshafen (DE)
(74) Vertreter: Schaumburg, Thoenes, Thurn, Landskron, Eckert

(57) **Zusammenfassung**

Eine Vorrichtung hat eine breitbandige Lichtquelle (28), die einen ersten Lichtstrahl erzeugt. Ein lichtdurchlässiger Festkörperfilter (44) der Vorrichtung hat eine Eintrittsgrenzfläche, zumindest eine erste Reflexionsgrenzfläche und eine Austrittsgrenzfläche. Der erste Lichtstrahl fällt an der Eintrittsgrenzfläche (51) des Festkörperfilters (44) in den Festkörperfilter (44) ein. Ein erster Anteil (52) des eingefallenen ersten Lichtstrahls wird beim Auftreffen auf die erste Reflexionsgrenzfläche (53) an der ersten Reflexionsgrenzfläche (53) total reflektiert und tritt an der Austrittsgrenzfläche (55) aus dem Festkörperfilter (44) aus. Ein zweiter Anteil (54) des eingefallen ersten Lichtstrahls tritt an der ersten Reflexionsgrenzfläche (53) aus dem Festkörperfilter (44) aus.

## Beschreibung

In der Fluoreszenzmikroskopie, insbesondere in der Laserscan-Mikroskopie, wird zum Beleuchten einer Probe, beispielsweise von biologischen Zellen, eine Lichtquelle mit kleiner Divergenz verwendet, deren Lichtleistung sich kontinuierlich oder diskret über einen vorgegebenen spektralen Bereich verteilt. Dabei werden verschiedene Bereiche der Probe unter dem Mikroskop sichtbar gemacht, indem sie mit verschiedenen Farbstoffen eingefärbt werden. Jeder dieser Farbstoffe absorbiert in einem für ihn charakteristischen Wellenlängenbereich das Licht und fluoresziert in einem, hin zu längeren Wellenlängen verschobenen Wellenlängenbereich.

Eine Lichtquelle mit einem breiten Wellenlängenspektrum, insbesondere eine breitbandige Lichtquelle, ermöglicht, eine Vielzahl von Farbstoffen zu verwenden und insbesondere zur Fluoreszenz in einem weiten Spektralbereich anzuregen und somit unterschiedlichste Strukturen und Vorgänge in der zu untersuchenden Probe darzustellen. Mit Hilfe eines oder mehrerer Filter kann für unterschiedliche Farbstoffe die optimale Anregungswellenlänge aus dem Anregungslicht herausgefiltert werden. Derartige Filter umfassen beispielsweise Absorptionsfilter, Reflexionsabschwächer, Interferenzfilter, akusto-optische Filter, dichroitische Filter, Farbfilter und/oder Spiegel mit dielektrischen Spezialschichten.

Eine hohe Intensität des Anregungslichts mit einem kontinuierlichen Spektrum innerhalb eines vorgegebenen Wellenlängenbereichs kann beispielsweise mittels eines Lasers erzielt werden, dem ein spektral verbreiterndes optisches Element, beispielsweise eine spezielle Faser, nachgeschaltet ist. Das Licht des Lasers wird in das optische Element eingekoppelt, welches das Spektrum des Laserlichts zu einem so genannten "Superkontinuum" verbreitert. In diesem Zusammenhang spricht man auch häufig von einem "Weißlichtlaser". Das optische Element kann beispielsweise so ausgebildet sein, dass beim Einkoppeln des Laserlichts erwünschte nicht-lineare optische Effekte auftreten, die eine Verbreiterung des Spektrums des von dem Laser abgestrahlten Lichts bewirken.

Während eine hohe Intensität des so erzeugten Lichts im sichtbaren Bereich gerade bei der Mikroskopie äußerst vorteilhaft ist, stellt diese hohe Intensität beispielsweise im Infraroten ein hohes Gesundheitsrisiko für Bediener eines derartigen Mikroskops dar. Zum Einhalten von Laserschutzvorschriften für Laser mit einem breiten Spektrum, wozu auch zu rechnen sind Laser, deren Licht spektral verbreitert wurde, ist es nötig, insbesondere den infraroten Anteil des Laserlichts herauszufiltern, vorzugsweise ohne die Intensität des Lichts im sichtbaren Bereich zu vermindern.

US 6,485,149 B1 offenbart eine Vorrichtung und ein Verfahren zum Aufteilen eines Lichtstrahls mit unterschiedlichen Wellenlängenkomponenten in mehrere Teillichtstrahlen mit vorgegebenen Wellenlängen. Dabei wird die Totalreflexion des Lichtstrahls an einer inneren Grenzfläche eines Brechungsmediums ausgenutzt.

Die Aufgabe der vorliegenden Erfindung ist es, eine Vorrichtung mit einer breitbandigen Lichtquelle und einen Festkörperfilter zu schaffen, die wirkungsvoll ein Filtern eines vorgegebenen Anteils des von der ersten Lichtquelle abgestrahlten Lichts ermöglichen, vorzugsweise bei unverminderter Intensität des abgestrahlten Lichts im sichtbaren Bereich.

Die Aufgabe wird gelöst durch die Merkmale des unabhängigen Patentanspruchs. Vorteilhafte Ausgestaltungen der Erfindung sind in den Unteransprüchen angegeben.

Die Erfindung zeichnet sich gemäß einem ersten Aspekt der Erfindung durch eine Vorrichtung mit einer breitbandigen Lichtquelle aus, die einen ersten Lichtstrahl erzeugt. Ein lichtdurchlässiger Festkörperfilter hat eine Eintrittsgrenzfläche, zumindest eine erste Reflexionsgrenzfläche und eine Austrittsgrenzfläche. Der erste Lichtstrahl fällt an der Eintrittsgrenzfläche des Festkörperfilters in den Festkörperfilter ein. Ein erster Anteil des eingefallenen ersten Lichtstrahls wird beim Auftreffen auf die erste Reflexionsgrenzfläche des Festkörperfilters an der ersten Reflexionsgrenzfläche total reflektiert und tritt an einer Austrittsgrenzfläche des Festkörperfilters aus dem Festkörperfilter aus. Ein zweiter Anteil des eingefallen ersten Lichtstrahls tritt an der ersten Reflexionsgrenzfläche des Festkörperfilters aus dem Festkörperfilter aus.

Dies ermöglicht unter Ausnutzung der Totalreflexion gemäß dem Snelliusschen Brechungsgesetz, in Abhängigkeit von einem Winkel, den das einfallende Licht mit einer Flächennormalen auf der ersten Reflexionsgrenzfläche einschließt, Licht in einem vorgegebenen Wellenlängenbereich, das dem zweiten Anteil des Lichts entspricht, aus dem von der breitbandigen Lichtquelle erzeugten Licht herauszufiltern, während die Intensität des ersten Anteils des Lichts unverändert bleibt. Dies kann zu einem Filtern von Infrarotlicht aus dem Anregungslicht und somit zum Einhalten von Laserschutzvorschriften beim Verwenden der Vorrichtung und/oder eines Mikroskops, insbesondere eines Laserscan-Mikroskops, das die Vorrichtung umfasst, beitragen. In diesem Zusammenhang ist mit Grenzfläche eine Fläche bezeichnet, die einen Übergang von dem Festkörperfilter zu einem optisch dünneren Medium, beispielsweise Luft, oder umgekehrt darstellt. Ferner wird mit Reflexionsgrenzfläche eine Grenzfläche bezeichnet, an der bestimmungsgemäß die Totalreflexion auftritt. Ferner kann der Festkörperfilter auch als TIR-Filter (Total Internal Refraction Filter) bezeichnet werden.

Die breitbandige Lichtquelle ist vorzugsweise ein breitbandiger Laser, beispielsweise ein Laser, dem ein spektral verbreiterndes optisches Element nachgeschaltet ist, das das Spektrum des ersten Lichtstrahls verbreitert.

Vorzugsweise ist der Festkörperfilter aus Glas, insbesondere aus hochdispersiven und/oder doppelbrechendem Glas gebildet. Die Verwendung des doppelbrechenden Glases steigert die Unterdrückungsrate für unpolarisiertes Licht. Eine Winkeldispersion innerhalb des Festkörperfilters kann einfach minimiert werden, indem der Festkörperfilter so angeordnet und ausgebildet ist, dass das einfallende Licht parallel oder näherungsweise parallel zu einer Flächennormalen auf der Eintrittsgrenzfläche verläuft und/oder dass der aus dem Festkörperfilter austretende Lichtstrahl parallel oder näherungsweise parallel zu einer Flächennormalen auf der Austrittsgrenzfläche verläuft.

Eine besonders steile Filterkante in einer Filtercharakteristik des Filters kann erzielt werden, indem der erste Anteil des Lichts nach der Totalreflexion an der ersten Reflexionsgrenzfläche an einer zweiten Reflexionsgrenzfläche und/oder an einer weiteren Reflexionsgrenzfläche, insbesondere mehrmals an der ersten und mehrmals an der zweiten Reflexionsgrenzfläche total reflektiert wird, bevor er aus der Austrittsgrenzfläche aus dem Festkörperfilter austritt. In diesem Zusammenhang sind die erste und die zweite Reflexionsgrenzfläche vorzugsweise parallel oder zumindest näherungsweise parallel zueinander ausgebildet. Ferner können auch die Eintritts- und die Austrittsgrenzfläche parallel oder zumindest näherungsweise parallel zueinander ausgebildet sein.

Eine Grenzwellenlänge des Filters kann einfach dadurch verschoben werden, dass der Festkörperfilter so drehbar gelagert ist, dass durch Drehen des Filters um sein Lager der Winkel zwischen der Flächennormalen auf der ersten Reflexionsgrenzfläche und dem einfallenden Lichtstrahl verändert wird. Dieser Winkel kann auch durch Verändern der körperlichen Ausgestaltung des Filters verändert werden, beispielsweise durch Verändern des Schnittwinkels zwischen der Eintrittsgrenzfläche und ersten Reflexionsgrenzfläche. Dadurch wird die Grenzwellenlänge für die Totalreflexion verschoben, was zu einem Verschieben des gefilterten Wellenlängenbereichs führt.

In einer vorteilhaften Ausgestaltung ist der Festkörperfilter so ausgebildet, dass der austretende Lichtstrahl parallel, näherungsweise parallel und/oder ohne Versatz zu dem einfallenden Lichtstrahl aus dem Festkörperfilter austritt. Beispielsweise kann dazu der Festkörperfilter aus zwei Teilkörpern gebildet sein.

In einer weiteren vorteilhaften Ausgestaltung umfasst der Festkörperfilter zumindest zwei Teilkörper, die an jeweils einer Kontaktfläche miteinander gekoppelt sind. In anderen Worten ist der Festkörperfilter modular aufgebaut und/oder mehrere Teilfilter sind hintereinander geschaltet. Dadurch kann die Filterwirkung verbessert und/oder verstärkt werden. Die Eintrittsgrenzfläche und die Austrittsgrenzfläche sind dann an einem ersten der beiden Teilkörper ausgebildet und die Austrittsgrenzfläche ist einem zweiten der beiden Teilkörper ausgebildet. Ferner können noch weitere Festkörperfilter miteinander gekoppelt sein, um den Filter zu bilden. Bei Verwendung der beiden Teilkörper sind diese vorzugsweise identisch ausgebildet, und/oder um einen vorgegebenen Winkel, vorzugsweise 180 Grad oder 90 Grad zueinander gedreht angeordnet. Bei der um 180 Grad zueinander gedrehten Anordnung kann einfach der Strahlversatz ausgeglichen werden, wohingegen bei der 90 Grad zueinander gedrehten Anordnung die Unterdrückungsrate für unpolarisiertes Licht erhöht werden kann und eine schmale Filterkante erzielt werden kann. Alternativ dazu kann auch ein einzelner Festkörperfilter so geschliffen sein, dass er entsprechend den zusammengefügten Teilkörpern wirkt.

Gemäß einer weiteren vorteilhaften Ausgestaltung umfasst die Vorrichtung zusätzlich zu dem Festkörperfilter zumindest einen akusto-optischen Filter, der zum Filtern des aus dem Festkörperfilter austretenden ersten Anteils des Lichts vorgesehen ist. Dies ermöglicht einfach weitere unerwünschte Wellenlängenbereiche aus dem ersten Anteil des Lichts herauszufiltern.

In einer weiteren vorteilhaften Ausgestaltung umfasst die Vorrichtung ein Mikroskop, insbesondere ein Laserscan-Mikroskop, bei dem zum Beleuchten einer zu untersuchenden Probe zumindest teilweise das gefilterte Licht der breitbandigen Lichtquelle verwendet wird.

Ausführungsbeispiele der Erfindung sind im Folgenden anhand von schematischen Zeichnungen näher erläutert.

Es zeigen:
- Figur 1: eine schematische Darstellung einer breitbandigen Lichtquelle und eines Strahlverlaufs in einem Festkörperfilter,
- Figur 2: eine Ausführungsform des Festkörperfilters ohne Strahlversatz,
- Figur 3: eine Ausführungsform des Festkörperfilters mit besonders schmaler Filterkante,
- Figur 4: Formeln zur Berechnung von Größen des Festkörperfilters,
- Figur 5: eine Filtercharakteristik des Festkörperfilters,
- Figur 6: die breitbandige Lichtquelle, eine zweite Lichtquelle, ein Strahlvereiniger mit dem Festkörperfilter und ein Laserscan-Mikroskop.

Elemente gleicher Konstruktion oder Funktion sind figurenübergreifend mit den gleichen Bezugszeichen gekennzeichnet.

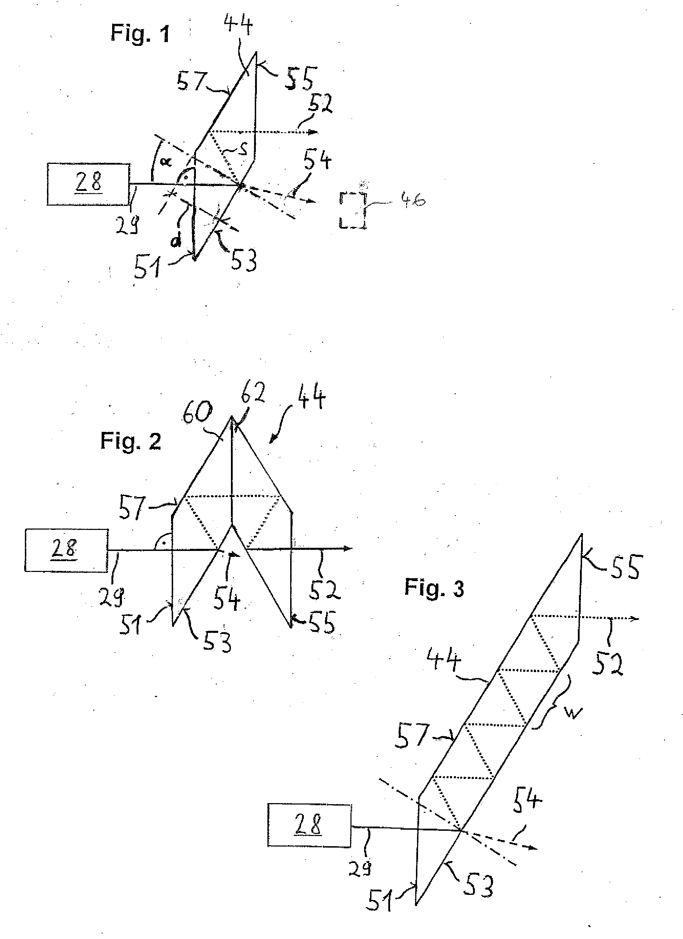

Figur 1 zeigt eine Vorrichtung mit einer breitbandigen Lichtquelle 28 und mit einem Festkörperfilter 44. Das Licht der breitbandigen Lichtquelle 28 ist vorzugsweise unpolarisiert, hat vorzugsweise eine geringe Divergenz und die Leistung ist kontinuierlich oder diskret über einen vorgegebenen spektralen Bereich verteilt. Insbesondere umfasst die breitbandige Lichtquelle 28 vorzugsweise einen breitbandigen Laser, beispielsweise einen, dem ein spektral verbreiterndes optisches Element nachgeschaltet ist. Das optische Element verbreitert das Spektrum des Laserlichts. Das optische Element umfasst beispielsweise eine photonische Kristallfaser (PCF), eine dotierte Faser und/oder eine Glasfaser, die an einer Stelle so verjüngt ist, dass beim Durchgang von Licht mit einer hohen Intensität, beispielsweise das Licht des Lasers, nicht-lineare optische Effekte auftreten, die das Verbreitern des Spektrums bewirken. Die breitbandige Lichtquelle 28 strahlt beispielsweise Licht 29 mit einem kontinuierlichen Wellenlängenspektrum zwischen 300 und 2600 nm ab, das unpolarisiert sein kann.

Der Festkörperfilter 44 ist für das Licht der breitbandigen Lichtquelle 28 transparent, insbesondere lichtdurchlässig. An einer ersten Seite des Festkörperfilters 44 fällt das Licht 29 der breitbandigen Lichtquelle 28 ein. In dem Festkörperfilter 44 wird das Licht unter Ausnutzung von Totalreflexion gemäß dem Snelliusschen Brechungsgesetz in einen ersten Anteil 52 und einen zweiten Anteil 54 aufgespalten. Dabei ist der Festkörperfilter 44 vorzugsweise so ausgebildet und bezüglich des einfallenden Lichts 29 so angeordnet, dass der erste Anteil 52 Licht mit Wellenlängen im sichtbaren Bereich enthält und dass der zweite Anteil 54 Licht mit Wellenlängen im Infrarotbereich enthält. Der Festkörperfilter 44 ist vorzugsweise aus Glas, insbesondere hochdispersivem und/oder doppelbrechendem Glas gebildet.

Insbesondere umfasst der Festkörperfilter 44 eine Eintrittsgrenzfläche 51, eine erste Reflexionsgrenzfläche 53, vorzugsweise eine zweite Reflexionsgrenzfläche 57 und eine Austrittsgrenzfläche 55. Vorzugsweise ist der Festkörperfilter 44 so ausgebildet und so bezüglich eines Strahlengangs des einfallenden Lichts 29 der breitbandigen Lichtquelle 28 angeordnet, dass der einfallende Lichtstrahl näherungsweise parallel zu einer Flächennormalen auf der Eintrittsgrenzfläche 51 ist. Näherungsweise parallel kann in diesem Zusammenhang bedeuten, dass der einfallende Lichtstrahl im Rahmen einer möglichen Konstruktionsgenauigkeit parallel ist oder dass er aufgrund einer beabsichtigten Drehung des Festkörperfilters 44 zum Verschieben eines gefilterten Wellenlängenbereichs nicht mehr exakt parallel ist. Dies trägt dazu bei, dass eine Winkeldispersion innerhalb des Festkörperfilters 44 vorzugsweise besonders gering ist. Die Winkeldispersion kann weiter verringert werden, wenn auch der Lichtstrahl des ersten Anteils 52 des Lichts, der an der Austrittsgrenzfläche 55 aus dem Festkörperfilter 44 austritt, und eine Flächennormale auf der Austrittsgrenzfläche 55 parallel zueinander sind. In diesem Zusammenhang ist es besonders vorteilhaft, wenn die Eintritts- und die Austrittsgrenzfläche 51, 55 parallel zueinander ausgebildet sind. Eine Wirkungsweise des Festkörperfilters 44 kann weiter verbessert werden, indem die Eintritts- und/oder Austrittsgrenzfläche 51, 55 mit je einer Antireflex-Beschichtung versehen sind.

Der Festkörperfilter 44 ist ferner so ausgebildet, dass der einfallende Lichtstrahl einen Winkel α mit einer Flächennormalen auf der ersten Reflexionsgrenzfläche 53 einschließt, wobei der Winkel α so gewählt ist, dass Licht im sichtbaren Bereich, beispielsweise mit Wellenlängen kleiner 750 nm, total an der ersten Reflexionsgrenzfläche 53 reflektiert wird und dass Licht mit Wellenlängen im Infrarotbereich, beispielsweise mit 750 nm und größer an der ersten Reflexionsgrenzfläche 53 aus dem Festkörper 44 austritt und hin zu einer Strahlfalle 46 geleitet wird, die in Figur 1 gestrichelt angedeutet ist. Vorzugsweise wird der total reflektierte erste Anteil 52 des Lichts vor einem Austritt aus der Austrittsgrenzfläche 55 zumindest einmal an der zweiten Reflexionsgrenzfläche 57 total reflektiert.

In diesem Zusammenhang ist es besonders vorteilhaft, wenn die erste und die zweite Reflexionsgrenzfläche 53, 57 parallel zueinander ausgebildet sind.

Der Festkörperfilter 44 stellt unabhängig von der breitbandigen Lichtquelle 28 einen eigenen Aspekt der Erfindung dar und kann auch zum Filtern von Licht anderer Lichtquellen verwendet werden.

Figur 2 zeigt eine Ausführungsform, bei der der Festkörperfilter 44 einen ersten Teilkörper 60 und einen zweiten Teilkörper 62 umfasst. Die beiden Teilkörper 60, 62 können identisch ausgebildet sein. Dadurch können Produktionskosten gering gehalten werden. Ferner können die Teilkörper 60, 62 an je einer Kontaktfläche des jeweiligen Teilkörpers 60, 62 miteinander gekoppelt sein. Dabei können die Teilkörper 60, 62 beispielsweise um 180° zueinander gedreht angeordnet sein, wodurch ein Strahlversatz zwischen dem einfallenden Lichtstrahl und dem austretenden Lichtstrahl ausgeglichen wird. Insbesondere können die beiden Teilkörper 60, 62 so ausgebildet und angeordnet sein, dass der einfallende und der ausfallende Lichtstrahl jeweils in Verlängerung gesehen deckungsgleich zueinander sind. Ferner können auch mehr als zwei Teilkörper 60, 62 miteinander gekoppelt sein. Alternativ dazu kann der Festkörperfilter 44 anstatt aus zwei oder mehr Teilkörper 60, 62 auch monolithisch mit einem geeigneten Schliff ausgebildet sein, ohne dass ein Strahlversatz vorliegt, beispielsweise in Würfelform (nicht dargestellt), was dazu beiträgt, dass der Festkörperfilter 44 justageunempfindlich ist.

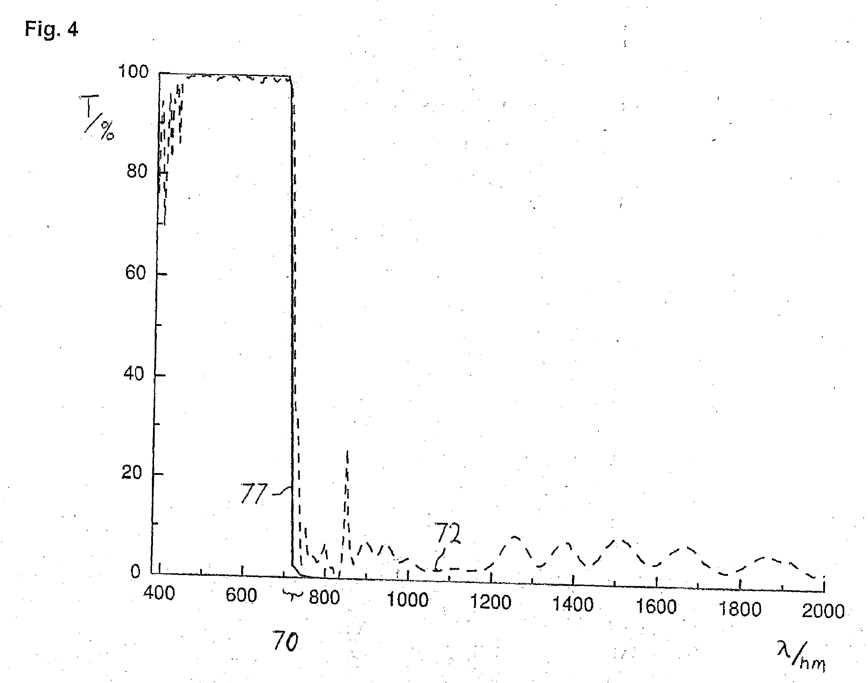

Eine Wirkungsweise des Festkörperfilters 44 kann weiter verbessert werden, wenn der erste Anteil 52 des Lichts innerhalb des Festkörperfilters 44 mehrmals an der ersten Reflexionsgrenzfläche 53 und an der zweiten Reflexionsgrenzfläche 57 reflektiert wird, wie in Figur 3 gezeigt. Durch die Mehrfachreflexion innerhalb des Festkörperfilters 44 wird eine Breite 70 oder die Flankensteilheit einer Filterkante einer in Figur 4 dargestellten Filtercharakteristik des Festkörperfilters 44 verringert. Eine steile Filterkante trägt zu einer verbesserten Wirkungsweise des Festkörperfilters 44 bei. Die Filtercharakteristik zeigt eine in Prozent ausgedrückte Transmission T, die dem ersten Anteil 52 des Lichts entspricht, in Abhängigkeit von einer Wellenlänge λ in nm.

In Figur 4 ist die Kennlinie des Festkörperfilters 44 als durchgezogene Kennlinie 77 dargestellt und wird mit einer gestrichelt dargestellten Kennlinie 72 eines Spiegels mit dielektrischer Beschichtung verglichen. Die Filtercharakteristik zeigt insbesondere, dass bei dem Festkörperfilter 44 die Transmission T im sichtbaren Bereich näherungsweise bei 100% liegt, wohingegen sie im infraroten Bereich vollständig unterdrückt ist. In diesem Zusammenhang kann der Festkörperfilter (44) auch als "Kantenfilter" bezeichnet werden.

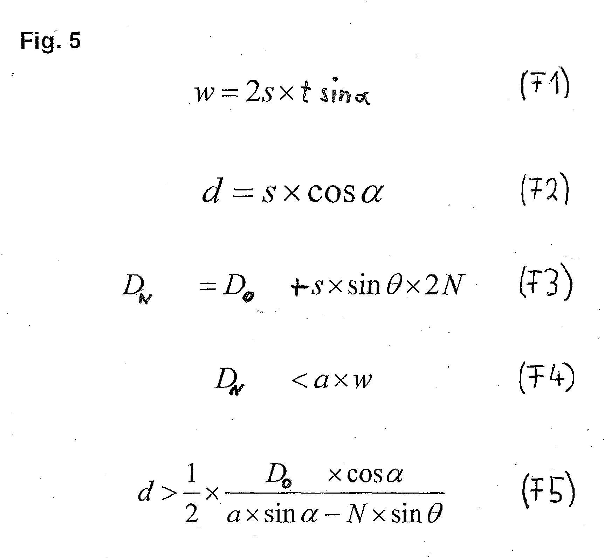

Die mathematische Bedingung für die Totalreflexion ist, dass ein wellenlängenabhängiger Brechungsindex, der beispielsweise in dem Festkörperfilter 44 durch die Sellmeier-Formel für Glas gegeben ist, multipliziert mit dem Sinus des Winkel α zum Einfallslot gleich 1 ist, was dem Snelliusschen Brechungsgesetz beim Übergang vom Festkörperfilter 44 zur Luft entspricht. Berücksichtigt man den halben Öffnungswinkel Θ (Figur 5) des Strahls des Lichts 29 der breitbandigen Lichtquelle 28, so wird für die Totalreflexion gefordert, dass der wellenlängenabhängige Brechungsindex multipliziert mit dem Sinus der Differenz des Winkels α und des halben Öffnungswinkels Θ gleich 1 ist. Der halbe Öffnungswinkel Θ ist beispielsweise 1,2 mrad.

Der Festkörperfilter 44 in Figur 3 weist zwischen der ersten und der zweiten Reflexionsgrenzfläche 53, 57 eine Dicke d auf. Das Licht legt in dem Festkörperfilter 44 von einem ersten Reflexionspunkt zu einem zweiten Reflexionspunkt eine Strecke s zurück. Dabei ergibt sich an einer der Reflexionsgrenzflächen 53, 57 ein Abstand w zwischen zwei Reflexionspunkten an der entsprechenden Reflexionsgrenzfläche 53, 57.

Figur 5 zeigt Formeln F1 bis F5 anhand der die Dicke d des Festkörperfilters 44 in Abhängigkeit eines Strahldurchmessers D₀ des Lichts 29 der ersten Lichtquelle 28, des Winkels α, eines Parameters a, der beispielsweise 0,5 ist, des halben Öffnungswinkels Θ und einer Anzahl N der Totalreflexionen innerhalb des Festkörperfilters 44 dargestellt ist, wobei berücksichtigt ist, dass sich keine Interferenzen im Festkörperfilter 44 ergeben. In die Formeln F3 und F4 geht ferner ein Durchmesser D_{N} des Lichts nach der Anzahl N, beispielsweise zehn, von Totalreflexionen innerhalb des Festkörperfilters 44 ein. Somit ergibt sich beispielsweise bei einem Strahldurchmesser D₀ von einem Millimeter, einem Winkel α von 35°, dem Parameter a gleich 0,5 und dem halben Öffnungswinkel Θ von 1,2 mrad die Dicke d zu größer 1,5 mm. Somit kann der Festkörperfilter 44 vorteilhafter Weise besonders klein und kompakt ausgebildet werden.

Der Festkörperfilter 44 kann so drehbar gelagert sein, dass während des Betriebs der Vorrichtung ein Einfallswinkel zwischen der Flächennormalen auf der ersten Reflexionsgrenzfläche 51 und dem einfallenden Lichtstrahl durch Drehen des Festkörperfilters 44 vorgegeben werden kann und so die Filterkante in der Filtercharakteristik abhängig von der Wellenlänge verschoben werden kann. Dies bewirkt zwar mit zunehmendem Einfallswinkel eine zunehmende Winkeldispersion an der Eintritts- und Austrittsgrenzfläche 51, 55, ermöglicht aber ein Verschieben der Filterkante in der Filtercharakteristik ohne Austauschen des Festkörperfilters 44.

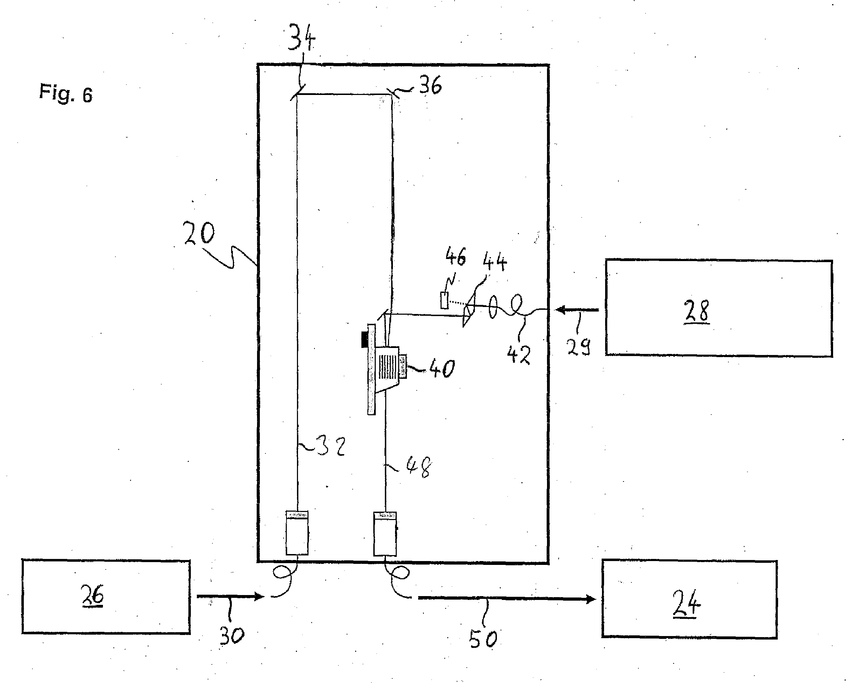

Figur 6 zeigt eine Ausführungsform der Vorrichtung mit einem Strahlvereiniger 20, einem Laserscan-Mikroskop 24, der breitbandigen Lichtquelle 28 und einer zweiten Lichtquelle 26, beispielsweise einem Linienlaser. Der Strahlvereiniger 20 umfasst eine Faser 32 zum Einkoppeln des Lichts, und einen ersten und zweiten Spiegel 34, 36, über die Licht 30 der zweiten Lichtquelle 26 hin zu einem aktiven akusto-optischen Filter 40 geleitet wird. Ferner umfasst der Strahlvereiniger 20 eine optische Faser 42, insbesondere ein Breitbandfaserkabel und/oder eine Singlemodefaser (Einmodenfaser), über das das Licht 29 der breitbandigen Lichtquelle 28 hin zu dem Festkörperfilter 44 geleitet wird.

Der aktive akusto-optischer Filter 40 ermöglicht, Licht mit vorgegebener Wellenlänge oder in vorgegebenen Wellenlängenbereichen auszufiltern und dieses zu einer Faser 48 zum Auskoppeln des Lichts zu leiten. Das aus dem Strahlvereiniger 20 austretende Licht wird vorzugsweise zum Beleuchten einer Probe, beispielsweise einer biologischen Probe, in dem Laserscan-Mikroskop 24 genutzt.

Der aktive akusto-optische Filter 40 umfasst vorzugsweise einen akusto-optischen Kristall, insbesondere einen optisch anisotropen Kristall, beispielsweise aus Tellurdioxid, Lithiumniobad oder Quarz. Der akusto-optische Kristall ist vorzugsweise mit einem Piezokristall (acustic transducer) gekoppelt. Durch Anlegen einer Frequenz von beispielsweise 80 bis 150 MHz an den Piezokristall erzeugt dieser eine Ultraschallwelle, die sich im Kristall fortsetzt. Die Ultraschallwelle erzeugt im Kristall ein Brechungsindexgitter, an dem abhängig von der Frequenz der Ultraschallwelle bestimmte Wellenlängen des Lichts gebeugt werden. Regelmäßig ist ferner an dem aktiven akusto-optischen Filter 40 eine eigene Strahlfalle vorgesehen, die die ungebeugten Strahlen absorbiert, während die gebeugten Strahlen den akusto-optischen Kristall mit nahezu unverminderter Intensität verlassen und dann weiterverwendet werden können.

Der aus dem Festkörperfilter 44 austretende erste Anteil 52 kann mit hoher Effizienz in ein Einmodenglasfaserkabel, beispielsweise mittels einer Linse, eingekoppelt werden, wobei die hohe Effizienz insbesondere durch Vermeiden der Winkeldispersion erzielt wird.

Der Festkörperfilter 44 ermöglicht ein Abblocken der Infrarotstrahlung des Lichts 29 der breitbandigen Lichtquelle 28, auch für den Fall, dass der aktive akusto-optische Filter 40 ausfällt. Dies trägt zu einer Gewährleistung einer vorgegebenen Laserschutzklasse und zu einem sicheren Arbeiten mit der breitbandigen Lichtquelle 28 und/oder mit dem Laserscan-Mikroskop 24 bei.

Die Erfindung ist nicht auf die angegebenen Ausführungsbeispiele beschränkt. Beispielsweise kann der Festkörperfilter 44 einen beliebigen Aufbau aufweisen, innerhalb dessen die Totalreflexion des sichtbaren Lichts gewährleistet ist, bei sicherer Filterung des Infrarotlichts. Ferner kann der Festkörperfilter 44 aus mehr als zwei Teilkörpern gebildet sein. Beispielsweise können die Teilkörper mehrfach um 90° und 180° zueinander gedreht sein, so dass ohne Strahlversatz polarisiertes Licht und/oder eine besonders schmale Filterkante erzielt werden können. Ferner kann der Festkörperfilter 44 so ausgebildet sein, dass innerhalb des Festkörperfilters 44 eine beliebig hohe Anzahl von Totalreflexionen auftreten, wobei vorzugsweise darauf geachtet wird, dass die reflektierten Strahlen nicht miteinander interferieren. Insbesondere kann auch nur eine Totalreflexion innerhalb des Festkörperfilters 44 erfolgen. Ferner können die Anzahl der Teilkörper und die Anzahl der darin auftretenden Totalreflexionen unterschiedlich kombiniert werden.

### Bezugszeichenliste

- 20: Strahlvereiniger
- 24: Laserscan-Mikroskop
- 26: zweite Lichtquelle
- 28: breitbandige Lichtquelle
- 29: Licht der breitbandigen Lichtquelle
- 30: Licht der zweiten Lichtquelle
- 32: Faser zum Einkoppeln
- 34: erster Spiegel
- 36: zweiter Spiegel
- 40: aktiver akusto-optischer Filter
- 42: optische Faser
- 44: Festkörperfilter
- 46: Strahlfalle
- 48: Faser zum Auskoppeln
- 50: ausgekoppeltes Licht
- 51: Eintrittsgrenzfläche
- 52: erster Anteil des ersten Lichtstrahls
- 53: erste Reflexionsgrenzfläche
- 54: zweiter Anteil des ersten Lichtstrahls
- 55: Austrittsgrenzfläche
- 57: zweite Reflexionsgrenzfläche
- 60: erster Teilkörper
- 62: zweiter Teilkörper
- 70: Breite der Filterkante
- 72: Kennlinie des dielektrischen Spiegels
- 77: Kennlinie des Festkörperfilters
- d: Dicke des Festkörperfilters
- s: Strecke
- α: Winkel
- w: Abstand
- D₀: Durchmesser des Lichtstrahls der ersten Lichtquelle
- N: Anzahl der Reflexionen
- D_{N}: Durchmesser des Lichtstrahls nach N Reflexionen
- Θ: halber Öffnungswinkel des Lichtstrahls der ersten Lichtquelle
- T: Transmission
- λ: Wellenlänge
- F1-F5: Formeln eins bis fünf

## Patentansprüche

1. Vorrichtung mit einer breitbandigen Lichtquelle (28), die einen ersten Lichtstrahl erzeugt, **gekennzeichnet durch** einen lichtdurchlässigen Festkörperfilter (44), der eine Eintrittsgrenzfläche, zumindest eine erste Reflexionsgrenzfläche und eine Austrittsgrenzfläche hat, wobei der erste Lichtstrahl an der Eintrittsgrenzfläche (51) in den Festkörperfilter (44) einfällt und ein erster Anteil (52) des eingefallenen ersten Lichtstrahls beim Auftreffen auf die erste Reflexionsgrenzfläche (53) des Festkörperfilters (44) an der ersten Reflexionsgrenzfläche (53) total reflektiert wird und an der Austrittsgrenzfläche (55) aus dem Festkörperfilter (44) austritt und wobei ein zweiter Anteil (54) des eingefallen ersten Lichtstrahls an der ersten Reflexionsgrenzfläche (53) des Festkörperfilters (44) aus dem Festkörperfilter (44) austritt.

2. Vorrichtung nach Anspruch 1, bei der der erste Anteil (52) des ersten Lichtstrahls Licht mit Wellenlängen im sichtbaren Bereich und kürzere Wellenlängen als das Licht im sichtbaren Bereich umfasst und/oder bei der der zweite Anteil (54) des ersten Lichtstrahls Licht mit Wellenlängen im Infrarot-Bereich umfasst.

3. Vorrichtung nach einem der vorstehenden Ansprüche, bei der ein Winkel (α), den der eingefallene erste Lichtstrahl mit einer Flächennormalen der ersten Reflexionsgrenzfläche (53) einschließt größer oder gleich einem Winkel ist, unter dem Licht im Infraroten Bereich an der ersten Reflexionsgrenzfläche (53) total reflektiert wird.

4. Vorrichtung nach einem der vorstehenden Ansprüche, bei der der einfallende erste Lichtstahl in einem Winkel von näherungsweise 90 Grad auf die Eintrittsgrenzfläche (51) auftrifft.

5. Vorrichtung nach einem der vorstehenden Ansprüche, bei der der erste Anteil (52) des Lichts nach der Totalreflexion an der ersten Reflexionsgrenzfläche (53) zumindest an einer zweiten Reflexionsgrenzfläche (57) total reflektiert wird, bevor er an der Austrittsgrenzfläche (55) aus dem Festkörperfilter (44) austritt.

6. Vorrichtung nach Anspruch 5, bei der die erste und die zweite Reflexionsgrenzfläche (53, 57) parallel oder näherungsweise parallel zueinander ausgebildet sind.

7. Vorrichtung nach einem der vorstehenden Ansprüche, bei der die Eintrittsgrenzfläche (51) und die Austrittsgrenzfläche (55) parallel oder näherungsweise parallel zueinander ausgebildet sind.

8. Vorrichtung nach einem der vorstehenden Ansprüche, bei der der Festkörperfilter (44) so drehbar gelagert ist, dass durch Drehen des Festkörperfilters (44) der Einfallswinkel des einfallenden Lichtstrahls zu der Eintrittsgrenzfläche (51) veränderbar ist.

9. Vorrichtung nach einem der vorstehenden Ansprüche, bei der der aus dem Festkörperfilter (44) austretende Lichtstrahl parallel, näherungsweise parallel und/oder ohne Versatz zu dem einfallenden ersten Lichtstrahl aus dem Festkörperfilter (44) austritt.

10. Vorrichtung nach einem der vorstehenden Ansprüche, bei der der Festkörperfilter (44) zumindest zwei Teilkörper (60, 62) umfasst, die an jeweils einer Kontaktfläche miteinander gekoppelt sind, wobei die Eintrittsgrenzfläche und die erste Reflexionsgrenzfläche (51, 53) an einem ersten der beiden Teilkörper (60) ausgebildet ist und wobei die Austrittsgrenzfläche (55) an einem zweiten der beiden Teilkörper (62) ausgebildet ist.

11. Vorrichtung nach einem der vorstehenden Ansprüche, bei der das Material des Festkörperfilters (44) hochdispersiv und/oder doppelbrechend ist.

12. Vorrichtung nach einem der vorstehenden Ansprüche, bei der die Eintrittsgrenzfläche (51) und/oder die Austrittsgrenzfläche (55) mit einer Antireflex-Beschichtung beschichtet sind.

13. Vorrichtung nach Anspruch 12, bei der die beiden Teilkörper (60, 62) identisch ausgebildet sind und um 180 Grad oder 90 Grad oder um näherungsweise 180 Grad oder 90 Grad gedreht zueinander angeordnet sind.

14. Vorrichtung nach einem der vorstehenden Ansprüche, die einen akusto-optischen Filter (40) umfasst, der den an der Austrittsgrenzfläche (55) des Festkörperfilters (44) austretenden Lichtstrahl filtert.

15. Vorrichtung nach einem der vorstehenden Ansprüche, die ein Mikroskop (24) umfasst, bei dem zum Beleuchten einer zu untersuchenden Probe zumindest ein spektraler Bereich des Lichts (29) der ersten Lichtquelle (28) verwendet wird.

16. Vorrichtung nach Anspruch 15, bei der das Mikroskop (24) ein Laserscan-Mikroskop ist.
